# EUROPÄISCHE PATENTSCHRIFT

(11) **EP 3 746 676 B1**
(45) Veröffentlichungstag und Bekanntmachung des Hinweises auf die Patenterteilung: **27.07.2022**
(21) Anmeldenummer: 19702253.6
(22) Anmeldetag: 28.01.2019
(51) Int. Cl.: F16F 9/49

(54) **SCHWINGUNGSDÄMPFER FÜR EIN FAHRZEUG**
VIBRATION DAMPER FOR A VEHICLE
AMORTISSEUR DE VIBRATIONS POUR UN VÉHICULE

(30) Priorität: 29.01.2018 DE 102018201297
(43) Veröffentlichungstag der Anmeldung: 09.12.2020
(73) Patentinhaber: Bayerische Motoren Werke Aktiengesellschaft, 80809 München (DE)
(72) Erfinder: GROSS, Dietmar, 85258 Weichs (DE); MAIER, Johannes, 85586 Poing (DE)
(86) Internationale Anmeldenummer: PCT/EP2019/052022
(87) Internationale Veröffentlichungsnummer: WO 2019/145547

(56) Entgegenhaltungen:
- EP-A1- 3 239 556
- EP-A2- 2 738 417

## Beschreibung

Die Erfindung betrifft einen Schwingungsdämpfer für ein Fahrzeug nach dem Oberbegriff des Anspruchs 1. Zum Stand der Technik wird beispielshalber auf die EP 2 952 775 A2 und die DE 602 10 652 T2 verwiesen.

Schwingungsdämpfer, auch als Stoßdämpfer bezeichnet, für Fahrzeuge sind im Stand der Technik in den unterschiedlichsten Varianten bekannt. Sie stellen ein sicherheitsrelevantes Bauteil dar, welches die Schwingungen der gefederten Massen zu dämpfen vermag, weshalb man diese auch als Schwingungsdämpfer bezeichnet. Schwingungsdämpfer zwischen Achse und Aufbau sind notwendig, da die Aufbau- und die Reifenfeder zusammen mit den zugehörigen Massen ein schwingfähiges System mit zwei Eigenfrequenzen für die Aufbau- und die Radmasse bilden. Diese werden oft auch als gefederte (Aufbau) und ungefederte (Rad- bzw. Achs-)Masse tituliert. Da die typische Straßenanregung breitbandig ist, müssen diese Eigenfrequenzen bedämpft werden.

Im Kraftfahrzeugbau hat sich heute die hydraulischmechanische Dämpfung durchgesetzt, besonders in der Bauform des sogenannten Teleskopstoßdämpfers, da dieser wegen seiner kleinen Abmessungen, geringen Reibung, präzisen Dämpfung und einfachen Bauart das Optimum darstellt.

Hydraulische Stoßdämpfer bestehen im Wesentlichen aus einem ölbefüllten Zylinder und einer darin geführten Kolbenstange mit Kolben. Bei axialer Bewegung der Kolbenstange (und damit des Kolbens) gegenüber dem Zylinder muss das Öl durch enge Kanäle und Ventile im Kolben strömen. Durch den Widerstand, der dem Öl dabei entgegengebracht wird, werden Druckdifferenzen erzeugt, die über Wirkflächen die Dämpfungskräfte erzeugen.

Bei derartigen Teleskopdämpfern sind zwei unterschiedliche Formen zu unterscheiden, nämlich sogenannte Zweirohrdämpfer und sogenannte Einrohrdämpfer.

Der Einrohrstoßdämpfer ist in eine Arbeitskammer (Ölraum) und einen Gegendruckraum (Gaskammer) untergliedert. Im Ölraum wird die eigentliche Dämpferarbeit vollbracht, das heißt, die am Kolben sitzenden Dämpfungsventile setzen dem durch den Kolben hindurchfließenden Öl einen Widerstand entgegen. Dadurch wird eine Druckdifferenz erzeugt, die der sich relativ zum Behälter bewegenden Kolbenstange eine dämpfende Kraft entgegensetzt. Die Gaskammer gleicht Volumenänderungen beim Ein- und Ausfahren der Kolbenstangen und durch Temperaturschwankungen aus.

Der Zweirohrdämpfer umfasst neben einem Zylinderrohr, in dem sich der an der Kolbenstange befestigte und mit weiteren Ventilteilen bestückte Kolben axial bewegt, ein weiteres koaxial angeordnetes Behälterrohr. Der Kolben teilt den inneren Ölraum in einen oberen und unteren Arbeitsraum. In der Druckstufe fährt die Kolbenstange ein und es strömt ein Teil des Öls aus dem unteren Arbeitsraum durch das Kolbenventil in den oberen Arbeitsraum. Das der eintauchenden Kolbenstange entsprechende Ölvolumen wird dabei durch ein am unteren Ende des Zylinderrohres befindliches Bodenventil in den so genannten Ausgleichsraum zwischen Zylinder- und Behälterrohr gedrückt. Dabei wird ebenfalls durch das Bodenventil eine für die Dämpfung relevante Druckdifferenz erzeugt. Beim Ausfahren der Kolbenstange (Zugstufe) übernimmt das Kolbenventil die Dämpfung, während durch das Bodenventil das der ausfahrenden Kolbenstange entsprechende Ölvolumen weitgehend ungehindert zurückfließt.

Weiterhin wird bei den Stoßdämpfern zwischen geregelten und passiven Systemen unterschieden. Bei geregelten Stoßdämpfern werden die Ventile aktiv elektronisch angesteuert. Dies ermöglicht eine Einstellung der Dämpfereigenschaft je nach Situation und gewünschtem Betriebspunkt. Hierzu ist jedoch ein komplexer Aufbau mit einem zusätzlichen Aktuator und Verkabelungen notwendig. Dies verursacht sowohl zusätzliche Kosten, als auch zusätzliches Gewicht und Bauraum.

Passive Stoßdämpfer reagieren dagegen ohne eine Zuhilfenahme von zusätzlichen Aktuatoren auf Schwingungen bzw. Anregungen vom Fahrzeug bzw. von der Fahrbahn. Dies hat den Nachteil, dass diese nicht wie die geregelten Systeme situativ eingestellt werden können. Andererseits erfordern die passiven Systeme keine zusätzlichen Aktuatoren oder Verkabelung, weshalb sie hinsichtlich Komplexität, Bauraum und Kosten deutliche Vorteile gegenüber den aktiven Systemen aufweisen.

Aus dem Stand der Technik sind jedoch auch passive Stoßdämpfersysteme bekannt, welche derart ausgebildet sind, dass diese in Abhängigkeit von bestimmten Bewegungsgrößen betrieben werden können.

Beispielsweise ist es aus der DE 602 10 652 T2 bekannt, einen Dämpfer mit einem frequenzabhängigen bzw. frequenzselektiven Ventil zu erweitern. Das frequenzabhängige bzw. frequenzselektive Ventil ermöglicht eine frequenzabhängige Dämpfung der Schwingungen.

Weiterhin ist aus der EP 2 952 775 A2 ein System bekannt, welches die Dämpferwirkung des Stoßdämpfers in Abhängigkeit des Hubs des Kolbens verändern kann.

EP 3 239 556 A1 beschreibt einen Schwingungsdämpfer mit den Merkmalen des Oberbegriffs des Anspruchs 1.

Es ist Aufgabe der Erfindung, einen verbesserten Schwingungsdämpfer eines Fahrzeuges aufzuzeigen.

Die Lösung der Aufgabe ergibt sich durch einen Schwingungsdämpfer für ein Fahrzeug mit den Merkmalen des Anspruchs 1. Vorteilhafte Aus- und Weiterbildungen sind Inhalt der Unteransprüche.

Es wird ein Schwingungsdämpfer (im Folgenden auch als Stoßdämpfer bezeichnet) für ein Fahrzeug vorgeschlagen, welcher zumindest ein eine Fluidkammer bildendes Zylinderrohr umfasst, in welchem eine Kolbenanordnung axial gleitend angeordnet ist. Dabei wird ein im Stand der Technik erläuterter Teleskopstoßdämpfer, insbesondere ein Zweirohrstoßdämpfer, vorgeschlagen. Die Kolbenanordnung bzw. ein Kolben einer solchen Kolbenanordnung teilt dabei das Zylinderrohr in eine obere und in eine untere mit Fluid befüllbaren Arbeitskammer.

Die Kolbenanordnung ihrerseits umfasst dabei eine koaxial zum Zylinderrohr angeordnete und axial zu diesem bewegbare Kolbenstange, an welcher koaxial ein Kolben (im Folgenden auch als Hauptkolben bezeichnet) angeordnet ist. Der Kolben ist dabei axial im Zylinderrohr mit der Kolbenstange verschiebbar angeordnet. Der Kolben umfasst zumindest ein Kolbenventil mittels welchem ein Fluidfluss zwischen der oberen und der unteren Arbeitskammer ermöglicht wird. Eine geeignete Querschnittsverdünnung bzw. Verdickung dieser Durchgangslöcher ermöglicht dabei die Dämpfungsfunktion.

Das Zylinderrohr ist üblicherweise im Einbauzustand im Fahrzeug ein zumindest annähernd in Fahrzeughochrichtung ausgerichtetes Bauteil (wobei die Zylinderlängsachse zumindest annähernd in Fahrzeughochrichtung ausgerichtet ist), weshalb unter einer oberen Arbeitskammer jene gemeint ist, welche sich in Fahrzeughochrichtung betrachtet oberhalb des Kolbens und unter einer unteren Arbeitskammer jene gemeint ist, welche sich in Fahrzeughochrichtung betrachtet unterhalb des Kolbens befindet.

Weiterhin ist eine Verlängerung der Kolbenstange in Richtung des Zylinderrohrbodens bzw. des Zylinderbodens vorgesehen, welche über den Hauptkolben hinaus geht und an welcher ein weiterer, hubabhängiger Kolben koaxial angeordnet ist. Der Durchmesser (also Außendurchmesser) dieses hubabhängigen Kolbens ist dabei kleiner als jener des Hauptkolbens bzw. der Innenmantelfläche des Zylinderrohrs. Der hubabhängige Kolben dient der Schaffung einer zusätzlichen Dämpfung, welche jedoch erst ab Erreichen eines bestimmten Dämpferhubs bzw. einer bestimmten axialen Eintauchtiefe des hubabhängigen Kolbens in Richtung des Zylinderrohrbodens wirkt.

Die Wirkung dieser Dämpfung bzw. des hubabhängigen Kolbens geschieht dabei hubabhängig, nämlich ab jener Eintauchtiefe des hubabhängigen Kolbens in das Zylinderrohr, ab welcher der Durchmesser einer Innenmantelfläche derjenigen des Außendurchmessers des hubabhängigen Kolbens entspricht.

Je nach dem ab welcher Höhe im Zylinderrohr ein derartiger geringerer Durchmesser einer Innenmantelfläche gewählt wird (also die genannte Eintauchtiefe), geschieht eine andere Dämpfung, nämlich eine solche, welche von dem hubabhängigen Kolben bestimmt wird. In anderen Worten bedeutet dies, dass ab einem bestimmten Hub des Kolbens bzw. des Stoßdämpfers eine andere Dämpfung, insbesondere eine höhere Dämpferwirkung, erfolgt.

Dadurch wird ein hubabhängiges Ventil gebildet.

Es ist weiterhin vorgesehen, dass der hubabhängige Kolben, neben einem hubabhängigem Ventil, ein frequenzabhängiges Ventil umfasst.

Unter einem frequenzabhängigen Ventil bzw. frequenzselektiven Ventil wird im Sinne dieser Erfindung ein Ventil verstanden, welches die Dämpfkraft des Schwingungsdämpfers abhängig von der Anregungsfrequenz des Ventils zu ändern vermag. Diese Änderung erfolgt dabei ohne eine externe Einstellung, sondern lediglich durch das Vorhandensein eines solchen frequenzabhängigen Ventils.

Abzugrenzen davon sind bekannte Ventile (beispielsweise Kolben- bzw. Bodenventile) eines Schwingungsdämpfers, welche nur abhängig von der Geschwindigkeit unterschiedliche Dämpfkräfte liefern; d.h. ändert man bei solchen herkömmlichen Ventil (beispielsweise einem Kolben- bzw. Bodenventil) lediglich den Hub, unter konstanter Geschwindigkeit, so ändert sich die Dämpfkraft nicht. Ändert man den Hub jedoch bei einem erfindungsgemäßen frequenzabhängigen Ventil unter konstanter Geschwindigkeit, so ändert sich auch die Dämpfkraft. Andersherum ändert sich auch die Dämpfkraft bei der Verwendung eines frequenzabhängigen Ventils, bei gleichbleibendem Hub und veränderter Geschwindigkeit.

Eine derartige Ausbildung ermöglicht, dass der Stoßdämpfer in jeweils einer Stufe (also Druck- und Zugstufe) von zusätzlichen Bewegungsgrößen des Fahrzeuges abhängig betrieben werden kann. So kann neben einer hubabhängigen Dämpfkraft in einer Druckstufe zusätzliche eine frequenzabhängige Dämpfung in einer Zugstufe realisiert werden, welche beiden Dämpfungen wiederrum mittels einem gemeinsamen Bauteil ausgeführt werden können. Dies hat insbesondere jenen Vorteil gegenüber bereits vorhandenen Stoßdämpferausführungen, dass eine frequenz- und hubabhängige Dämpfung in jeweils einer Stufe des Dämpfers mit einem einzigen Bauteil, ohne einen größeren Mehraufwand oder Bauraumbedarf verwirklicht werden kann.

Es wird also ein Schwingungsdämpfer aufgezeigt, welcher in Abhängigkeit von mehreren Bewegungsgrößen des Fahrzeuges bzw. der Umwelt betrieben werden kann und welcher in einer Stufe des Dämpfers sowohl in Abhängigkeit von der Schwingungsfrequenz, als auch von dem Hub des Kolbens unterschiedlich dämpfen kann und gleichzeitig im Vergleich zu den bekannten Stoßdämpferausführungen, welche nur je Stufe frequenzabhängig bzw. frequenzselektiv oder hubabhängig dämpfen können, keinen Mehraufwand bezüglich Komplexität oder Bauraum aufweist.

Dabei ist es bevorzugt vorgesehen, dass das frequenzabhängige Ventil bzw. dessen Kolben, in welchem dieses integriert ist, koaxial zu dem hubabhängigen Kolben angeordnet ist und zumindest teilweise von diesem umschlossen ist. Besonders bevorzugt bilden das frequenzabhängige Ventil und der hubabhängige Kolben ein gemeinsames Bauteil. Dieses bevorzugte Bauteil ist in den Figuren näher beschrieben.

In einer alternativen Ausführungsform ist das frequenzabhängige Ventil an dem hubabhängigen Kolben angeordnet. Das frequenzabhängige Ventil muss also nicht zwangsweise in den hubabhängigen Kolben integriert sein. Es ist ebenso möglich, dass das frequenzabhängige Ventil beispielswiese direkt (entlang der Kolbenlängsachse betrachtet) oberhalb oder unterhalb des hubabhängigen Kolbens angeordnet ist und an diesen Kolben angrenzt.

Dabei soll vorerst die bevorzugte Funktionsweise und der bevorzugte geometrische Aufbau des hubabhängigen Kolbens erläutert werden.

Es ist bevorzugt, dass am unteren Ende (also im eingebauten Zustand des Stoßdämpfers in Fahrzeughochrichtung betrachtet) des Zylinderrohrs eine becherförmige Buchse koaxial zum Zylinderrohr angeordnet ist, welche mit ihrem geschlossenem Ende zumindest annähernd am Zylinderboden aufliegt bzw. in Richtung des Zylinderbodens ausgerichtet eingebaut ist. Das offene Ende der Buchse ist dann zumindest annähernd in Richtung des oberen Endes des Zylinderrohrs ausgerichtet, sodass der hubabhängige Kolben in dieses offene Ende eintauchen kann.

Der Außendurchmesser der becherförmigen Buchse ist dabei absichtlich geringer als der Innendurchmesser des Zylinderrohrs. Der Außendurchmesser der Buchse ist bevorzugt so viel kleiner als der Innendurchmesser des Zylinderrohrs gewählt, dass ein radialer Spalt zwischen dem Zylinderrohr und der Buchse entsteht, welcher einen Fluidfluss an den Zylinderrohrboden ermöglicht.

Wie bereits oben genannt, ist es weiterhin bevorzugt, dass der Stoßdämpfer einen Teleskopzweirohrdämpfer mit einem inneren und einem äußeren Zylinderrohr darstellt. Über ein Bodenventil am untersten Ende des inneren Zylinderrohrs, sind diese beiden Zylinderrohre fluidisch miteinander verbunden. Dabei wird bevorzugt eine Fluidverbindung zwischen der unteren Arbeitskammer und dem Bodenventil über beispielsweise mehrere Kanäle dargestellt. In dieser Erfindung geht es primär um die Betrachtung des inneren Zylinderrohrs, weshalb unter dem Begriff "Zylinderrohr" als solches das innere Zylinderrohr angesprochen wird (falls es sich um einen Zweirohrdämpfer handelt).

Die becherförmige Buchse ist dabei am Zylinderboden bzw. am Bodenventil des Dämpfers aufliegend angeordnet.

Der Innendurchmesser der Mantelfläche der Buchse ist dabei bevorzugt genauso groß gewählt, wie der Durchmesser des hubabhängigen Kolbens. Dadurch wirkt der hubabhängige Kolben erst dann ausschlaggebend, wenn dieser in seinem Eintauchniveau bzw. in seiner Eintauchtiefe die Buchse erreicht hat.

Da sich die Buchse vom Tiefennieveau bevorzugt am unteren Ende, beispielsweise im unteren Drittel der Zylinderrohrlänge, befindet, wirkt der hubabhängige Kolben erst ab Erreichen eines bestimmten Hubs des Stoßdämpfers bzw. des Rads des Fahrzeuges.

Erreicht also das Rad des Fahrzeuges bzw. der Stoßdämpfer die nötige Eintauchtiefe, ab welcher die Buchse angeordnet ist und fährt der hubabhängige Kolben in die Buchse ein, so wird die Dämpfkraft in diesem Bereich einstellbar erhöht. Die genannte Einstellung erfolgt dabei beispielsweise durch definierte Bypass-Fluss-Steuerungen an dem hubabhängigen Kolben vorbei bzw. durch diesen hindurch. Die genannte Buchse ermöglicht das Abbilden bzw. Aufbauen einer zusätzlichen Arbeitskammer, in welcher eine zusätzliche, progressive Dämpfkraft erzeugt werden kann.

Bei kleineren Dämpferhüben (welche also nicht die genannte Eintauchtiefe erreichen, ab welcher die Buchse angeordnet ist), werden der hubabhängige Kolben und der Hauptkolben in dem herkömmlichen Zylinderrohr bewegt. Da der Durchmesser des hubabhängigen Kolbens deutlich geringer ist, als der des Zylinderrohrs, strömt das Arbeitsfluid durch einen radialen Spalt zwischen Zylinderrohr und dem hubabhängigen Kolben hindurch, wobei nur eine geringe bzw. nahezu keine Zusatzdämpfung erzeugt wird. Die primäre Dämpfkraft wird stattdessen an dieser Stelle von dem Hauptkolben erzeugt.

Bei großen Dämpferhüben dagegen, wenn also der Hub derart hoch ist, dass der hubabhängige Kolben in die Buchse eintaucht, dann wirkt der hubabhängige Kolben in diesem Bereich gemeinsam mit der Buchse wie eine zusätzliche Kompressionskammer. Das verdrängte Arbeitsfluid wird dann bevorzugt zwischen dem hubabhängigen Kolben und dem geschlossenen Boden der Buchse komprimiert. Je tiefer also der hubabhängige Kolben in die Buchse eindringt (je höher also der Dämpferhub ist), desto stärker wird das Fluid komprimiert und desto höher ist der dadurch entstehende Widerstand und damit die Dämpfung.

Dabei ist es möglich, dass die genannte zusätzliche, hubabhängige Dämpfung beispielsweise durch Bypass-Kanäle durch den hubabhängigen Kolben realisiert werden kann.

Um einen abrupten Übergang von der (Haupt)Dämpfung durch den Hauptkolben auf die Dämpfung durch den hubabhängigen Kolben zu vermeiden, bzw. den Übergang fließender zu gestalten, ist es in einer bevorzugten Variante der Erfindung alternativ zu den genannten Bypässen bzw. zusätzlich zu diesen vorgesehen, dass die becherförmige Buchse zumindest eine an dessen inneren Mantelfläche axial erstreckende konische Nut bzw. konische Vertiefung aufweist. Eine solche konische Nut bzw. bevorzugt mehrere solcher radial über die Mantelinnenfläche der Buchse verteilte konische Nuten erstrecken sich dabei bevorzugt vom Buchseneingang in axialer Richtung in Richtung des Buchsenbodens und verengen sich dabei konisch. Der genannte Widerstand kann auf diese Weise, je nach Ausbildung und Länge der Nuten vorteilhaft gesteuert werden.

Besonders bevorzugt reichen die Nuten bzw. die Nut nicht bis zum Ende des Buchsenbodens, sondern enden bereits einige Zentimeter vor diesem, sodass bei sehr hohem Dämpferhub (also wenn diese letzten Zentimeter der Buchse vom hubabhängigen Kolben erreicht sind) eine letzte sehr hohe Federkraft durch reine Komprimierung des Arbeitsfluides erreicht wird.

In einer weiteren vorteilhaften Ausgestaltung der Erfindung umfasst der hubabhängige Kolben einen den Außendurchmesser des hubabhängigen Kolbens bestimmenden Dichtring. Der Dichtring weist dabei also bevorzugt den gleichen Außendurchmesser auf, wie die Innenmantelfläche der Buchse. Dies ermöglicht eine Funktion bzw. Wirkung des hubabhängigen Kolbens in einer Druckstufe des Stoßdämpfers. Die Wirkung in einer Druckstufe des Stoßdämpfers bedeutet in diesem Sinne also, dass die hubabhängige Dämpfung nur dann realisiert ist, wenn der Teleskopdämpfer zusammengedrückt wird bzw. wenn sich die Kolbenstange in einer Abwärtsbewegung in Richtung des Zylinderbodens befindet.

Taucht also beispielsweise der hubabhängige Kolben in einer solchen Druckstufe des Dämpfers in die mit den genannten konischen Nuten ausgebildete Buchse ein, so erfolgt der Fluidfluss von der unteren zusätzlichen Arbeitskammer der Buchse in die "untere Arbeitskammer" des Zylinderrohrs (welche durch den Hauptkolben gebildet wird) durch die konischen Nuten radial an dem Dichtring vorbei. Dadurch, dass die Nuten konisch ausgebildet sind und sich damit in axialer Richtung in Richtung des Buchsenbodens verschmälern, bis sie gar nicht mehr vorhanden sind, wird die Dämpfung mit erhöhtem Hub des Dämpfers ebenfalls immer höher.

Der hubabhängige Kolben umfasst dabei weiterhin bevorzugt Durchgangsbohrungen, durch welche in einer Zugstufe des Dämpfers das Arbeitsfluid wieder zurück von der "unteren Arbeitskammer" des Zylinderrohrs (also welche durch den Hauptkolben gebildet wird) in die Buchse bzw. die zusätzliche Arbeitskammer, welcher durch den hubabhängigen Kolben in der Buchse gebildet wird, fließen kann.

Es ist weiterhin bevorzugt vorgesehen, dass in einer solchen Zugstufe der hubabhängige Kolben nicht mehr wirkt und stattdessen das frequenzabhängige Ventil wirken kann.

Als Zugstufe wird also bekanntermaßen jene Situation des Teleskopstoßdämpfers angesprochen, in welcher sich die Kolbenstange wieder aus dem Zylinderrohr hinaus verschiebt (quasi entlang der Zylinderlängsachse und zumindest annähernd in Fahrzeughochrichtung, also weg von dem Zylinderboden).

Besonders bevorzugt und vorteilhaft an der genannten Erfindung ist jedoch immer, dass in einer Zugstufe eine frequenzabhängige Dämpfung (und in der Druckstufe eine hubabhängige Dämpfung ermöglicht wird. Dabei ist es weiterhin bevorzugt und vorteilhaft, dass diese Abhängigkeit der Dämpfung in den beiden Stufen von jeweils unterschiedlichen Bewegungsgrößen des Fahrzeuges (also einmal von der Frequenz und einmal vom Kolbenhub) durch ein gemeinsames Bauteil, nämlich den hubabhängigen Kolben realisiert werden kann.

Alternativ ist es möglich dass diese Abhängigkeit der Dämpfung in den beiden Stufen von jeweils unterschiedlichen Bewegungsgrößen des Fahrzeuges (also einmal von der Frequenz und einmal vom Kolbenhub) durch ein kombiniertes Bauteil aus hubabhängigem Kolben und frequenzabhängigen bzw. frequenzselektiven Ventil realisiert werden kann.

Die frequenzabhängige Dämpfung ist dabei bevorzugt derart realisiert, dass ein frequenzabhängiges bzw. ein frequenzselektives Ventil (auch bekannt als FSD-Ventil) in den hubabhängigen Kolben integriert ist.

Wie oben bereits genannt, ist es alternativ auch möglich, dass das frequenzabhängige Ventil am hubabhängigen Kolben angeordnet (und nicht integriert) ist.

Weiterhin ist bevorzugt, dass ein Bypass durch Kolbenstange und deren Verlängerung hindurch direkt in das Innere des hubabhängigen Kolbens vorgesehen ist, welcher zu dem frequenzabhängigen Ventil führt. Der Bypass ist dabei bevorzugt an einer Position oberhalb des Hauptkolbens in der Kolbenstange angeordnet, sodass das Arbeitsfluid von der oberen in die untere Arbeitskammer durch die Kolbenstange hindurch direkt zum frequenzabhängigen Ventil geleitet wird.

Zur Realisierung eines frequenzabhängigen bzw. frequenzselektiven Ventils, welches in den hubabhängigen Kolben integriert ist bzw. zur Realisierung einer frequenzabhängigen Dämpfung, umfasst der hubabhängige Kolben bevorzugt ein im Inneren des hubabhängigen Kolbens angeordnetes Zusatzvolumen, welches über einen verengten Einlasskanal mit dem genannten Bypass in der Kolbenstange verbunden ist. Weiterhin umfasst der hubabhängige Kolben bevorzugt eine dazwischenliegende verformbare Membran, welche den Bypass- und das Zusatzvolumen voneinander trennt, sowie mehrere Auslasskanäle, welche den Bypass und die untere Arbeitskammer des Dämpfers miteinander fluidisch verbinden und eine Blattscheibe, welche im unbelasteten Zustand (also in einer Druckstufe des Dämpfers) die Auslasskanäle verschließt. Eine derartige Ausbildung des frequenzabhängigen bzw. frequenzselektiven Ventils im hubabhängigen Kolben ist in den Figuren nochmals veranschaulicht. Das frequenzabhängige bzw. frequenzselektive Ventil wirkt also bevorzugt dann, wenn sich der Stoßdämpfer in einer Zugstufe befindet.

Bewegt sich also beispielsweise die Kolbenanordnung axial von dem Zylinderboden mit einer niedrigen Bewegungsfrequenz weg, so fließt eine zumindest annähernd konstante Menge an Arbeitsfluid von der oberen Arbeitskammer in den Bypass. Somit liegt an dem Einlasskanal und an der Blattscheibe längerfristig Druck an. Dieser anliegende Druck führt dazu, dass das im Bypass befindliche Arbeitsfluid durch den Einlasskanal in das Zusatzvolumen unter die Membran einströmt. Das sich dort ansammelnde Arbeitsfluid erzeugt einen spezifischen Druck im Zusatzvolumen, welcher zu einer bestimmten Dämpfkraft führt. Diese Kraft ist dabei derart ausgebildet, dass diese die Membran nach oben drückt, wodurch auch die Blattscheibe nach oben gedrückt bzw. gepresst wird. Die Auslasskanäle verschließen sich. Dadurch wird ein Ausströmen des Arbeitsfluids aus dem Zusatzvolumen des frequenzabhängigen bzw. frequenzselektiven Ventils verhindert. Die Dämpfkraft wird nicht verringert.

Steigt die Bewegungsfrequenz des Hubkolbens bzw. des Hauptkolbens (in einer Zugstufe) beispielsweise durch eine Fahrt des Fahrzeuges auf einer rauen Fahrbahn an, so entstehen ruckartige Ströme des Arbeitsfluids durch den Bypass. Diese ruckartigen Ströme erzeugen ebenso ruckartige Druckschwankungen, welche auf die Blattscheibe, die Membran und den Einlasskanal wirken. Aufgrund der starken Druckschwankungen am Einlasskanal kann sich kein Arbeitsfluid in dem Zusatzvolumen ansammeln. Die an der Blattscheibe anliegenden Druckschwankungen führen zu einer Verformung der Blattscheibe in Richtung des Zusatzvolumens. Durch diese Verformung werden die Auslasskanäle geöffnet. Das Fluid strömt dann aus dem hubabhängigen Kolben (in welchem sich das Zusatzvolumen befindet) in die untere Arbeitskammer. Die Dämpfkraft wird reduziert.

Der hubabhängige Kolben, welcher das genannte frequenzabhängige bzw. frequenzselektive Ventil umfasst und das hubabhängige Ventil bildet, ist dabei bevorzugt am unteren Ende einer Verlängerung der Kolbenstange angebunden. Beispielsweise kann dieser mit dem Ende der Verlängerung der Kolbenstange verschraubt sein. Hierzu ist es bevorzugt, dass das untere Ende der Verlängerung der Kolbenstande über ein Gewinde verfügt, an welche der hubabhängige Kolben geschraubt werden kann.

Die Erfindung zeigt die Ausbildung eines Stoßdämpfers, welcher durch Hinzufügen nur eines hubabhängigen Kolbens sowohl eine hubabhängige, als auch eine frequenzabhängige Dämpfung ermöglicht, welche in einem gemeinsamen Bauteil realisiert ist. Diese Integration von zwei Funktionen in ein einziges Bauteil erspart sowohl Kosten, als auch Bauraum.

Diese und weitere Merkmale gehen außer aus den Ansprüchen und aus der Beschreibung auch aus den Zeichnungen hervor.

Im Folgenden wird die Erfindung anhand von einem Ausführungsbeispiel weiter erläutert.

**Figur** 1 zeigt dabei schemenhaft einen Längsschnitt durch ein Zylinderrohr eines Stoßdämpfers eines Fahrzeuges mit einem erfindungsgemäßen hubabhängigen Kolben.

In **Figur 2** und **Figur 3** ist die Schnittansicht aus Figur 1 in einer detaillierteren Variante aufgezeigt, wobei der Fluidfluss und die Wirkungsweise des hubabhängigen Kolbens in einer Druck- und in einer Zugstufe einzeln aufgezeigt sind.

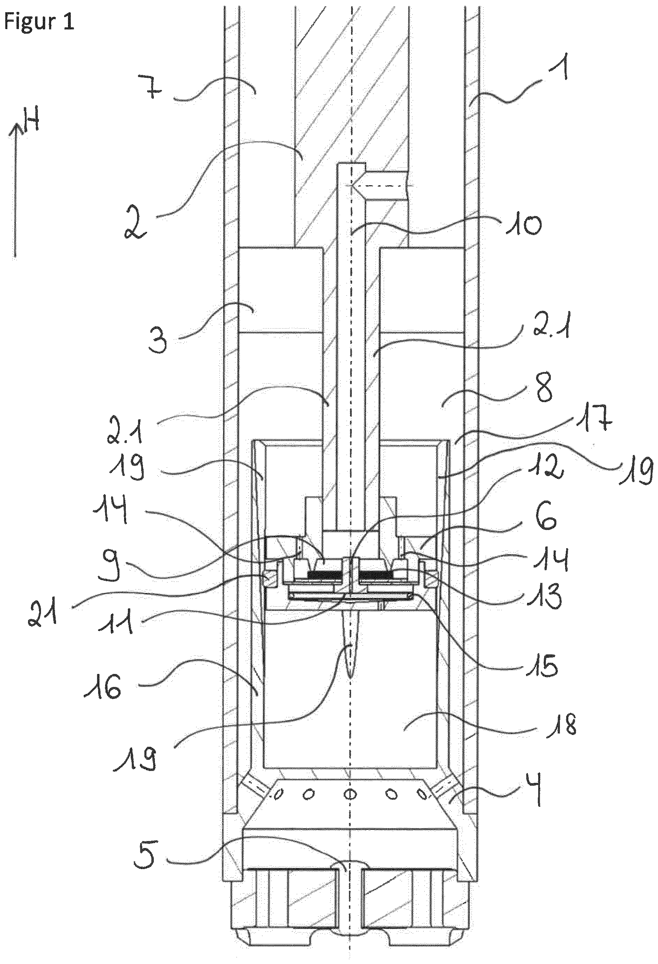

In **Figur 1** ist eine Schnittansicht durch die Längsachse eines beispielhaften erfindungsgemäßen fluidbefüllten Zylinderrohrs 1 eines Stoßdämpfers eines Fahrzeuges schemenhaft aufgezeigt. Das Zylinderrohr 1 in Figur 1 ist dabei zumindest annähernd in dessen Einbaulage im Fahrzeug, nämlich zumindest annähernd in Fahrzeughochrichtung H ausgerichtet.

Im Inneren des Zylinderrohrs 1 ist eine sich axial zum Zylinderrohr 1 auf und ab bewegbare Kolbenanordnung mit einem an einer axial im Zylinderrohr bewegbaren Kolbenstange 2 fest verbundener und ebenfalls axial im Zylinderrohr 1 gleitbaren Kolben 3 (auch als Hauptkolben bezeichnet) angeordnet. In dem Zylinderrohr 1 befindet sich Arbeitsfluid.

Am Zylinderboden 4 ist ein Bodenventil 5 angeordnet, welches einen Fluidfluss zwischen dem Zylinderrohr 1 und dem Äußeren des Zylinderrohrs 1 (wie beispielsweise bei einem Zweirohrdämpfer) ermöglicht.

Der Durchmesser des Hauptkolbens 3 entspricht dabei dem Durchmesser der Innenmantelfläche des Zylinderrohrs 1, wodurch der Hauptkolben 3 eine obere Arbeitskammer 7 und eine untere Arbeitskammer 8 bildet. Durch geeignete, nicht abgebildete Bypässe bzw. Durchgangsbohrungen durch den Hauptkolben 3 kann ein Fluidfluss von der oberen in die untere Arbeitskammer 7, 8 und durch bestimmte Querschnittsveränderungen dieser Bypässe eine Dämpfung erreicht werden, wie sie aus dem Stand der Technik bereits bekannt ist.

In einer bevorzugten Ausführung der Erfindung, was jedoch in diesem Beispiel nicht abgebildet ist, ist das Zylinderrohr 1 von einem weiteren Zylinderrohr umgeben, wobei der Stoßdämpfer dann einen sogenannten Zweirohrstoßdämpfer darstellt.

Am unteren Ende einer Verlängerung 2.1 der Kolbenstange 2 ist ein weiterer, ein hier genannter hubabhängiger Kolben 6, axial im Zylinderrohr 1 mit der Verlängerung 2.1 gleitend angeordnet. Der hubabhängige Kolben 6 ist dabei mit der Verlängerung 2.1 der Kolbenstange verschraubt. Hierzu umfasst die Verlängerung 2.1 der Kolbenstange 2 bevorzugt an deren unteren Ende ein nicht aufgezeigtes Gewinde, als welches der hubabhängige Kolben 6 eingedreht und damit befestigt wird.

Mit Hilfe dieses hubabhängigen Kolbens 6 sind eine Zusatzdämpfung in der Druckstufe und eine frequenzabhängige bzw. frequenzselektive Regelung bzw. Einstellung der Dämpfung in der Zugstufe des Stoßdämpfers in Abhängigkeit von dem Kolbenhub und der Schwingungsfrequenz bzw. Bewegungsfrequenz des Dämpfers zu realisieren.

Dabei sind diese Zusatzdämpfungen bzw. frequenzabhängige bzw. frequenzselektive Regelung jeweils in unterschiedlichen Betriebssituationen bzw. (Arbeits-)Stufen des Stoßdämpfers möglich. Die hubabhängige Dämpfung ist dabei in einer Druckstufe des Dämpfers und die frequenzabhängige bzw. frequenzselektive Dämpfung ist dabei in einer Zugstufe des Dämpfers realisierbar.

Der Dämpfer befindet sich dann in einer Druckstufe, wenn sich die Kolbenanordnung 2, 3 in Richtung des Zylinderbodens 4 bewegt und somit nach unten drückt. Der Teleskopstoßdämpfer verschiebt sich dabei axial ineinander und das Arbeitsfluid fließt von der unteren Arbeitskammer 7 in die obere Arbeitskammer 8.

In einer Zugstufe dagegen bewegt sich die Kolbenanordnung 2, 3 weg vom Zylinderboden 4 in axialer Richtung des Zylinderrohrs 1 nach oben. Der Teleskopstoßdämpfer verschiebt sich axial auseinander wobei das Arbeitsfluid von der oberen Arbeitskammer 8 in die untere Arbeitskammer 7 fließt.

Um die genannten beiden Zusatzfunktionen, nämlich eine frequenzabhängige bzw. frequenzselektive Dämpfung in einer Zugstufe und eine hubabhängige Dämpfung in einer Druckstufe des Dämpfers zu realisieren, ist der hubabhängige Kolben 6 weiterhin folgendermaßen ausgebildet:
Um eine frequenzabhängige bzw. frequenzselektive Dämpfung zu ermöglichen ist im Inneren des hubabhängigen Kolbens 6 ein aus dem Stand der Technik bekanntes frequenzabhängiges bzw. frequenzselektives Ventil 9 angeordnet, welches in Figur 1 nicht näher dargestellt ist.

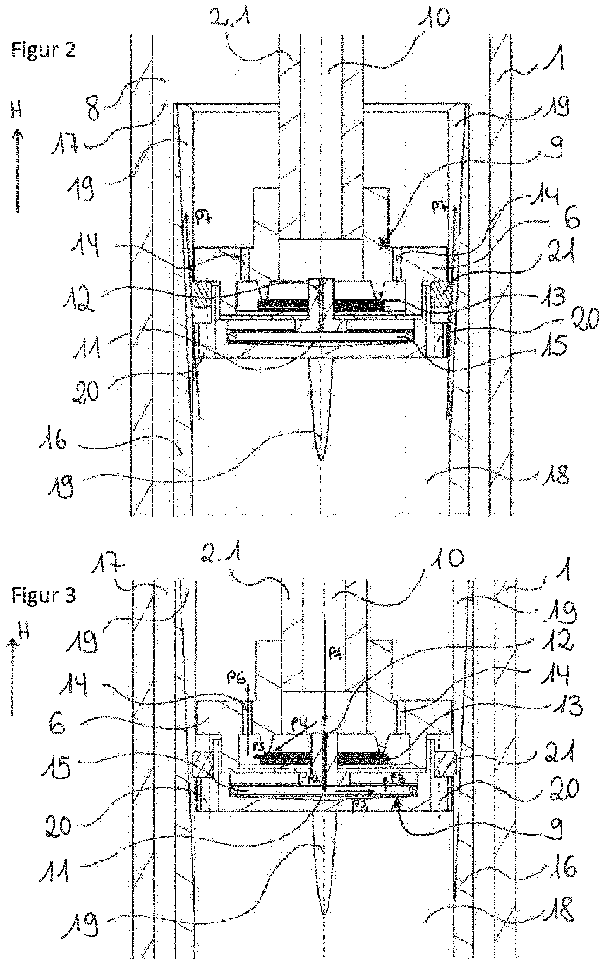

**Figur 3** beschreibt die Funktionsweise dieses frequenzselektiven Ventils 9 durch Darstellung von Pfeilen entlang der Strömungsrichtung des Fluids in einer Zugstufe des Dämpfers genauer. Dabei ist eine Detailansicht der Schnittansicht aus Figur 1 auf den hubabhängigen Kolben 6 aufgezeigt, welcher in der Buchse 16 eingetaucht ist.

Das frequenzselektive Ventil 9 wird dadurch gebildet, dass ein Bypass 10 durch die Kolbenstange 2 und die Verlängerung 2.1 der Kolbenstange 2 der oberen Arbeitskammer 7 in die untere Arbeitskammer 8 direkt in das Innere des frequenzselektiven Ventils 9 angeordnet ist. Wie in **Figur 3** dargestellt umfasst das frequenzselektive Ventil 9 ein Zusatzvolumen 11, welches über einen verengten Einlasskanal 12 mit dem genannten Bypass 10 in der Kolbenstange 2, 2.1 verbunden ist. Weiterhin umfasst das frequenzselektive Ventil 9 eine dazwischenliegende verformbare Membran 13, welche den Bypass 10 und das Zusatzvolumen 11 voneinander trennt, sowie mehrere Auslasskanäle 14, welche den Bypass 10 und die untere Arbeitskammer 8 des Dämpfers miteinander fluidisch verbinden.

In einem unbelasteten Zustand des frequenzselektiven Ventils 9 (also beispielsweise in einer Druckstufe des Dämpfers) werden die Auslasskanäle 14 von einer Blattscheibe 15 verschlossen.

Befindet sich also nun der Stoßdämpfer in einer Zugstufe, so ist dieser in Lage mittels des frequenzselektiven Ventils 9 im hubabhängigen Kolben 6 eine frequenzselektive Dämpfung zu ermöglichen.

Diese frequenzselektive Dämpfung soll anhand der Pfeilanordnung in Figur 3 näher erläutert werden. **Figur 2** und **Figur 3** zeigt dabei eine Detailansicht auf die Buchse 16 und den hubabhängigen Kolben 6 in derselben Schnittansicht, wie Figur 1. In **Figur 2** ist dabei der Dämpfer in einer Druckstufe und in **Figur 3** in einer Zugstufe abgebildet. In einer Zugstufe wirkt dabei das hubabhängige Ventil des hubabhängigen Dämpfers 6 nicht, während in einer Druckstufe das frequenzselektive Ventil 9 des unabhängigen Dämpfers 6 nicht wirkt.

Bewegt sich beispielsweise die Kolbenanordnung 2, 3 axial von dem Zylinderboden 4 mit einer niedrigen Bewegungsfrequenz weg, so fließt eine zumindest annähernd konstante Menge an Arbeitsfluid von der oberen Arbeitskammer 7 in den Bypass 10 (vgl. P1). Somit liegt an dem Einlasskanal 12 und an der Blattscheibe 15 längerfristig Druck an. Dieser anliegende Druck führt dazu, dass das im Bypass 10 befindliche Arbeitsfluid durch den Einlasskanal 12 in das Zusatzvolumen 11 unter die Membran 13 (vgl. P2) einströmt. Das sich dort ansammelnde Arbeitsfluid erzeugt einen spezifischen Druck im Zusatzvolumen 11, welcher zu einer bestimmten Kraft auf die Membran 13 (vgl. P3) führt. Diese Kraft ist dabei derart ausgebildet, dass diese die Membran 13 nach oben drückt, wodurch auch die Blattscheibe 15 nach oben gedrückt bzw. gepresst wird. Die Auslasskanäle 14 verschließen sich. Dadurch wird ein Ausströmen des Arbeitsfluids aus dem Zusatzvolumen 11 des frequenzselektiven Ventils 9 verhindert. Die Dämpfkraft verringert sich nicht.

Steigt die Bewegungsfrequenz des Hubkolbens bzw. des Hauptkolbens 3 (in einer Zugstufe) beispielsweise durch eine Fahrt des Fahrzeuges auf einer rauen Fahrbahn an, so entstehen ruckartige Ströme des Arbeitsfluids durch den Bypass 10 (vgl. P1). Diese ruckartigen Ströme erzeugen ebenso ruckartige Druckschwankungen, welche auf die Blattscheibe 15, die Membran 13 und den Einlasskanal 12 wirken. Aufgrund der starken Schwankungen und damit der zu schnellen Bewegung des Fluids auf den dafür in seinem Querschnitt zu schmalen Einlasskanal 12, kann kein Fluid durch den Einlasskanal 12 strömen und sich damit auch kein Arbeitsfluid in dem Zusatzvolumen 11 ansammeln. Das Fluid verteilt sich auf der Membran 13 (vgl. P4). Die an der Blattscheibe 15 anliegenden Druckschwankungen führen zu einer Verformung dieser Blattscheibe 15 in Richtung des Zusatzvolumens 11. Durch diese Verformung werden die Auslasskanäle 14 geöffnet (vgl. P5). Das Fluid strömt dann aus dem hubabhängigen Kolben 6 (in welchem sich das Zusatzvolumen 11 befindet) in die untere Arbeitskammer 8 (vgl. P6). Die Dämpfkraft wird reduziert.

Neben der soeben beschriebenen frequenzabhängigen bzw. frequenzselektiven Dämpfungsfunktion ermöglicht der hubabhängige Kolben 6 außerdem eine hubabhängige Dämpferfunktion des Stoßdämpfers in einer Druckstufe. Hierzu ist am unteren Ende des Zylinderrohrs 1, am Zylinderboden 4 aufliegend eine becherförmige Buchse 16 koaxial zum Zylinderrohr 1 angeordnet. Das geschlossene Ende der Buchse 16 liegt dabei am Zylinderboden 4 auf. Der Durchmesser der Außenmantelfläche der Buchse 16 ist dabei deutlich geringer als der Durchmesser der Innenmantelfläche des Zylinderrohrs 1, wodurch zwischen der Buchse 16 und dem Zylinderrohr 1 ein radialer Spalt 17 gebildet ist, welcher ein Fluidfluss zwischen dem Bodenventil 5 und dem Zylinderrohr 1 erlaubt.

Der Durchmesser der Innenmantelfläche der Buchse 16 entspricht dabei exakt dem Außendurchmesser des hubabhängigen Kolbens 6, welcher ab einem bestimmten Dämpferhub (also in einer Druckstufe) in die Buchse 16 eintaucht. Dabei wird der Außendurchmesser des hubabhängigen Kolbens 6 durch einen Dichtring 21 bestimmt, welcher dichtend an der Innenmantelfläche der Buchse 16 anzuliegen vermag.

Durch ein Eintauchen des hubabhängigen Kolbens 6 in die Buchse 16 bei einem bestimmten, durch die Höhe bzw. die Lage der Buchse innerhalb dem Zylinderrohr 1 vorgegebenen Dämpferhubs, wird eine Zusatzkammer 18 gebildet, in welcher Arbeitsfluid in einer Druckstufe (ab Erreichen des bestimmten Dämpferhubs) komprimiert wird.

Damit eine geeignete hubabhängige Dämpfung erreicht wird, können beispielsweise Bypässe in den hubabhängigen Kolben 6 angeordnet sein, welche nach dem Prinzip des Hauptkolbens 3 eine Dämpfung verursachen bzw. veranlassen.

Es ist alternativ oder auch zusätzlich möglich, wie in **Figur 1** insbesondere zu erkennen, die Buchse 16 mit einem oder mehreren konisch verlaufenden Nuten 19 an der Innenmantelfläche zu versehen. Diese Nuten 19 sind radial über die Mantelfläche der Buchse 16 verteilt in axialer Richtung der Buchse 16 angeordnet und verlaufen in Richtung Buchsenboden betrachtet spitzenförmig bzw. konisch.

Weiterhin ist es möglich, wie ebenfalls in **Figur 1** gut zu erkennen, dass die Nuten nicht bis zum Boden der Buchse 16 verlaufen, sondern bereits vorher enden.

Eine solche konische Ausbildung der Nuten hat den Vorteil, dass eine Dämpfung nicht abrupt, durch den abrupten Durchmesserunterschied zwischen der Buchse 16 und dem Zylinderrohr 16, verläuft, sondern dass ein allmählicher Übergang bzw. eine mit dem weiteren Dämpferhub einhergehende erhöhte Dämpfung geschieht. Die Dämpfung wird also mit steigendem Hub bzw. mit weiterem Eintauchen des hubabhängigen Kolbens 6 in die Buchse 16 mehr und mehr erhöht, bis das Arbeitsfluid in dem Bereich ohne Nuten 19 nur mehr komprimiert wird.

Damit das Arbeitsfluid während einer Zugstufe des Dämpfers von der unteren Arbeitskammer 8 in die Zusatzkammer 18 strömen kann, sind im hubabhängigen Kolben 6 Durchgangsbohrungen 20 vorgesehen.

Im Folgenden soll die Funktionsweise der hubabhängigen Dämpfung anhand **Figur 2** näher erläutert werden. In einer Druckstufe des Dämpfer, wenn sich also die Kolbenanordnung 2, 3 in Richtung des Zylinderbodens 4 axial bewegt, strömt vorerst Arbeitsfluid von der unteren Arbeitskammer 8 in die obere Arbeitskammer 7 durch die Bypässe bzw. Ventile des Hauptkolbens 3 hindurch. Die Dämpfung wird dann zumindest überwiegend von den Eigenschaften des Hauptkolbens 3 übernommen. Der hubabhängige Kolben 6 trägt an dieser Stelle noch vernachlässigbar wenig an der Dämpfung bei, da das Arbeitsfluid seitlich durch den durch den Durchmesserunterschied des hubabhängigen Kolbens 6 zum Zylinderrohr 1 entstehenden radialen Spalt hindurch strömt.

Erreicht jedoch der hubabhängige Kolben 6 die Buchse 16, ist also der Dämpferhub derart fortgeschritten, dass die Buchse 16 erreicht wird, so übernimmt der hubabhängige Kolben 6 einen großen Anteil der Dämpfung. Das Arbeitsfluid strömt, wie auf den Pfeilen (vgl. P7) in **Figur 2** dargestellt, dann durch die Nuten 19 radial außen an dem hubabhängigen Kolben 6 bzw. an dem Dichtring 21 vorbei.

Aufgrund der konischen Form der Nuten 19 wird der Durchströmquerschnitt mit steigendem Hub bzw. mit steigendem eintauchen des hubabhängigen Kolbens 6 in die Buchse 16 geringer und die Dämpfkraft damit höher.

Ab Erreichen des Endes der Nuten 19, kann kein Arbeitsfluid mehr von der Zusatzkammer 18 in die untere Arbeitskammer 8 strömen. Das Arbeitsfluid wird ab diesem Hub bzw. ab diesem Zeitpunkt mit steigendem Hub nur mehr komprimiert.

Befindet sich dann der Dämpfer wieder in einer Zugstufe, so strömt, wie in **Figur 3** auf den Pfeilen zu erkennen, das Arbeitsfluid von der unteren Arbeitskammer 8 in die Zusatzkammer 18 über die Bypässe bzw. die Durchgangsbohrungen 20 des hubabhängigen Kolbens 6.

### Bezugszeichenliste:

- 1: Zylinderrohr
- 2: Kolbenstange
- 2.1: Verlängerung der Kolbenstange
- 3: Hauptkolben
- 4: Zylinderboden
- 5: Bodenventil
- 6: hubabhängige Kolben
- 7: Obere Arbeitskammer
- 8: Untere Arbeitskammer
- 9: frequenzselektive Ventile
- 10: Bypass
- 11: Zusatzvolumen
- 12: Einlasskanal
- 13: Membran
- 14: Auslasskanal
- 15: Blattscheibe
- 16: Buchse
- 17: Spalt
- 18: Zusatzkammer
- 19: Nut
- 20: Durchgangsbohrung
- 21: Dichtring
- H: Fahrzeughochrichtung
- P1: Pfeil 1
- P2: Pfeil 2
- P3: Pfeil 3
- P4: Pfeil 4
- P5: Pfeil 5
- P6: Pfeil 6
- P7: Pfeil 7

## Patentansprüche

1. Schwingungsdämpfer für ein Fahrzeug umfassend
- zumindest ein eine Fluidkammer bildendes Zylinderrohr (1), in welchem
- eine Kolbenanordnung (2,3) axial gleitend angeordnet ist und das Zylinderrohr (1) in zwei Arbeitskammern, eine obere und eine untere Arbeitskammer (7,8), aufteilt und wobei
- die Kolbenanordnung (2,3) einen an einer axial zum Zylinderrohr (1) bewegbaren Kolbenstange (2) axial festgelegt und axial verschiebbaren Hauptkolben (3) mit einem den Fluidfluss zwischen der oberen und der unteren Arbeitskammer (7, 8) beeinflussenden Kolbenventil umfasst und wobei
- an einer axialen Verlängerung (2.1) der Kolbenstange (2) in Richtung eines Zylinderbodens (4) des Zylinderrohrs (1) ein weiterer hubabhängiger Kolben (6) angeordnet ist, welcher ab Erreichen eines bestimmten Dämpferhubs wirkt,
- und wobei der hubabhängige Kolben (6) einen geringeren Durchmesser als der Hauptkolben (3) aufweist und erst bei Eintauchen in einen geringeren Durchmesser einer Zylinderinnenmantelfläche wirkt wodurch
- ein hubabhängiges Ventil des hubabhängigen Kolbens gebildet wird
**dadurch gekennzeichnet, dass** der hubabhängige Kolben (6) zusätzlich zu einem hubabhängigen Ventil, ein frequenzabhängiges Ventil (9) umfasst.

2. Schwingungsdämpfer nach Anspruch 1, wobei das frequenzabhängige Ventil (9) koaxial zu dem hubabhängigen Kolben (6) angeordnet ist und zumindest teilweise von dem hubabhängigen Kolben (6) umschlossen ist.

3. Schwingungsdämpfer nach Anspruch 1, wobei das frequenzabhängige Ventil (9) koaxial zu dem hubabhängigen Kolben (6) angeordnet ist und unmittelbar am hubabhängigen Kolben angeordnet ist.

4. Schwingungsdämpfer nach einem der vorangegangenen Ansprüchen, wobei am unteren Ende des Zylinderrohrs (1) eine becherförmige Buchse (16) koaxial zu diesem angeordnet ist, deren Außendurchmesser geringer ist als der Innendurchmesser des Zylinderrohrs (1) und in welche der hubabhängige Kolben (6) ab Erreichen des bestimmten Dämpferhubs eintaucht und wirkt.

5. Schwingungsdämpfer nach Anspruch 4, wobei
der Stoßdämpfer ein Zweirohrdämpfer mit einem inneren und einen äußern Zylinderrohr ist und die becherförmige Buchse (16) innerhalb des inneren Zylinderrohrs (1) angeordnet ist.

6. Schwingungsdämpfer nach Anspruch 4 oder 5, wobei
die becherförmige Buchse (16) zumindest eine an dessen innerer Mantelfläche sich axial erstreckende konische Nut (19) aufweist, welche axial vom Buchseneingang in Richtung des Buchsenbodens verläuft und sich konisch verengt.

7. Schwingungsdämpfer nach Anspruch 6, wobei sich die zumindest eine Nut (19) nicht bis zum Buchsenboden erstreckt.

8. Schwingungsdämpfer nach einem der Ansprüche 4 bis 7, wobei
der hubabhängige Kolben (6) einen Dichtring (18) umfasst, wobei der Dichtring (18) den gleichen Durchmesser aufweist, wie die Innenmantelfläche der Buchse (16).

9. Schwingungsdämpfer nach einem der vorangegangenen Ansprüche, wobei der hubabhängige Kolben (6) zumindest eine Durchgangsbohrung (20) zum Durchfluss des Fluides von der oberen in die untere Arbeitskammer (7, 8) in einer Zugstufe des Stoßdämpfers umfasst.

10. Schwingungsdämpfer nach einem der vorangegangenen Ansprüche, wobei das hubabhängige Ventil in einer Druckstufe des Stoßdämpfers und das frequenzabhängige Ventil (9) in einer Zugstufe des Stoßdämpfers wirkt.

11. Schwingungsdämpfer nach einem der vorangegangenen Ansprüche, wobei die Kolbenstange (2) an einer Position in der oberen Arbeitskammer (7) einen Bypass (10) zum Durchfluss von Fluid von der oberen in die untere Arbeitskammer (7,8) durch die Kolbenstange (2) und die Verlängerung der Kolbenstange (2.1) hindurch direkt in das im hubabhängigen Kolben (6) integrierte frequenzabhängiges Ventil (9) umfasst.

12. Schwingungsdämpfer nach einem der vorangegangenen Ansprüche 1 bis 10, wobei die Kolbenstange (2) an einer Position in der oberen Arbeitskammer (7) einen Bypass (10) zum Durchfluss von Fluid von der oberen in die untere Arbeitskammer (7,8) durch die Kolbenstange (2) und die Verlängerung der Kolbenstange (2.1) hindurch direkt in das am hubabhängigen Kolben (6) angeordnete frequenzabhängiges Ventil (9) umfasst.

## Claims

1. Vibration damper for a vehicle, comprising:
- at least one cylinder tube (1) which forms a fluid chamber and in which
- a piston assembly (2, 3) is disposed so as to slide axially and divides the cylinder tube (1) into two working chambers, an upper and a lower working chamber (7, 8); and wherein
- the piston assembly (2, 3) comprises an axially displaceable primary piston (3) which is axially established on a piston rod (2) that is movable axially in relation to the cylinder tube (1), having a piston valve which influences the flow of fluid between the upper working chamber (7) and the lower working chamber (8); and wherein
- a further stroke-dependent piston (6) which acts upon reaching a specific damper stroke is disposed on an axial extension (2.1) of the piston rod (2) in the direction of a cylinder base (4) of the cylinder tube (1);
- and wherein the stroke-dependent piston (6) has a smaller diameter than the primary piston (3) and acts only when plunging into a smaller diameter of a cylinder-internal shell face, on account of which
- a stroke-dependent valve of the stroke-dependent piston is formed,
**characterized in that** the stroke-dependent piston (6), additionally to a stroke-dependent valve, comprises a frequency-dependent valve (9).

2. Vibration damper according to Claim 1, wherein the frequency-dependent valve (9) is disposed so as to be coaxial with the stroke-dependent piston (6) and is at least in part enclosed by the stroke-dependent piston (6).

3. Vibration damper according to Claim 1, wherein the frequency-dependent valve (9) is disposed so as to be coaxial with the stroke-dependent piston (6) and is disposed directly on the stroke-dependent piston.

4. Vibration damper according to one of the preceding claims, wherein a cup-shaped socket (16) is disposed on the lower end of the cylinder tube (1) so as to be coaxial with the latter, the external diameter of the socket (16) being smaller than the internal diameter of the cylinder tube (1) and the stroke-dependent piston (6) upon reaching the specific damper stroke plunging into the socket (16) and being active.

5. Vibration damper according to Claim 4, wherein the shock absorber is a twin-tube damper having an internal and an external cylinder tube, and the cup-shaped socket (16) is disposed within the internal cylinder tube (1).

6. Vibration damper according to Claim 4 or 5, wherein the cup-shaped socket (16) has at least one conical groove (19) axially extending on the internal shell face thereof, which conical groove (19) from the socket entry runs axially in the direction of the socket base and narrows in a conical manner.

7. Vibration damper according to Claim 6, wherein the at least one groove (19) does not extend up to the socket base.

8. Vibration damper according to one of Claims 4 to 7, wherein the stroke-dependent piston (6) comprises an annular seal (18), wherein the annular seal (18) has the same diameter as the internal shell face of the socket (16).

9. Vibration damper according to one of the preceding claims, wherein the stroke-dependent piston (6) comprises at least one through bore (20) for the flow of the fluid from the upper working chamber (7) into the lower working chamber (8) in a tension stage of the shock absorber.

10. Vibration damper according to one of the preceding claims, wherein the stroke-dependent valve acts in a compression stage of the shock absorber, and the frequency-dependent valve (9) acts in a tension stage of the shock absorber.

11. Vibration damper according to one of the preceding claims, wherein the piston rod (2) at a position in the upper working chamber (7) comprises a bypass (10) for the flow of fluid from the upper working chamber (7) into the lower working chamber (8), the flow being through the piston rod (2) and the extension of the piston rod (2.1) directly into the frequency-dependent valve (9) which is integrated in the stroke-dependent piston (6).

12. Vibration damper according to one of preceding Claims 1 to 10, wherein the piston rod (2) at a position in the upper working chamber (7) comprises a bypass (10) for the flow of fluid from the upper working chamber (7) into the lower working chamber (8), said flow being through the piston rod (2) and the extension of the piston rod (2.1) directly into the frequency-dependent valve (9) which is disposed on the stroke-dependent piston (6).

## Revendications

1. Amortisseur de vibrations pour un véhicule, comportant
- au moins un tube de cylindre (1) formant une chambre de fluide, dans lequel
- un ensemble de piston (2, 3) est disposé de manière axialement coulissante et divise le tube de cylindre (1) en deux chambres de travail, à savoir une chambre de travail supérieure et une chambre de travail inférieure (7, 8), et
- l'ensemble de piston (2, 3) comportant un piston principal (3) fixé axialement à une tige de piston (2) déplaçable axialement par rapport au tube de piston (1) et mobile axialement, lequel piston principal est doté d'une soupape de piston influençant l'écoulement de fluide entre la chambre de travail supérieure et la chambre de travail inférieure (7, 8) et
- un autre piston (6) dépendant de la course étant disposé au niveau d'un prolongement axial (2.1) de la tige de piston (2) en direction d'un fond de cylindre (4) du tube de cylindre (1), lequel piston agit une fois une course d'amortisseur déterminée atteinte,
- et le piston (6) dépendant de la course présentant un plus petit diamètre que le piston principal (3) et n'agissant que lorsqu'il plonge dans un diamètre plus petit d'une surface d'enveloppe intérieure de cylindre, de sorte
- qu'une soupape dépendant de la course du piston dépendant de la course soit formée,
**caractérisé en ce que** le piston (6) dépendant de la course comporte, en plus d'une soupape dépendant de la course, une soupape (9) dépendant de la fréquence.

2. Amortisseur de vibrations selon la revendication 1, la soupape (9) dépendant de la fréquence étant disposée coaxialement au piston (6) dépendant de la course et étant entourée au moins partiellement par le piston (6) dépendant de la course.

3. Amortisseur de vibrations selon la revendication 1, la soupape (9) dépendant de la fréquence étant disposée coaxialement au piston (6) dépendant de la course et étant disposée directement sur le le piston dépendant de la course.

4. Amortisseur de vibrations selon l'une des revendications précédentes, une douille (16) en forme de coupe étant disposée à l'extrémité inférieure du tube de cylindre (1) de manière coaxiale à celui-ci, douille dont le diamètre extérieur est inférieur au diamètre intérieur du tube de cylindre (1) et dans laquelle le piston (6) dépendant de la course plonge et agit une fois la course d'amortisseur déterminée atteinte.

5. Amortisseur de vibrations selon la revendication 4, l'amortisseur de chocs étant un amortisseur à deux tubes doté d'un tube de cylindre intérieur et d'un tube de cylindre extérieur et la douille (16) en forme de coupe étant disposée à l'intérieur du tube de cylindre (1) intérieur.

6. Amortisseur de vibrations selon la revendication 4 ou 5, la douille (16) en forme de coupe présentant au moins une rainure conique (19) s'étendant axialement sur sa surface d'enveloppe intérieure, laquelle rainure s'étend axialement à partir de l'entrée de douille en direction du fond de douille et se rétrécit de manière conique.

7. Amortisseur de vibrations selon la revendication 6, l'au moins une rainure (19) ne s'étendant pas jusqu'au fond de douille.

8. Amortisseur de vibrations selon l'une des revendications 4 à 7, le piston (6) dépendant de la course comportant une bague d'étanchéité (18), la bague d'étanchéité (18) présentant le même diamètre que la surface d'enveloppe intérieure de la douille (16).

9. Amortisseur de vibrations selon l'une des revendications précédentes, le piston (6) dépendant de la course comportant au moins un alésage traversant (20) pour l'écoulement du fluide de la chambre de travail supérieure dans la chambre de travail inférieure (7, 8) dans une étape de détente de l'amortisseur de chocs.

10. Amortisseur de vibrations selon l'une des revendications précédentes, la soupape dépendant de la course agissant dans une étape de compression de l'amortisseur de chocs et la soupape (9) dépendant de la fréquence agissant dans une étape de détente de l'amortisseur de chocs.

11. Amortisseur de vibrations selon l'une des revendications précédentes, la tige de piston (2) à une position dans la chambre de travail (7) supérieure comportant une dérivation (10) pour l'écoulement de fluide de la chambre de travail supérieure dans la chambre de travail inférieure (7, 8) à travers la tige de piston (2) et le prolongement de la tige de piston (2.1) directement dans la soupape (9) dépendant de la fréquence intégrée dans le piston (6) dépendant de la course.

12. Amortisseur de vibrations selon l'une des revendications précédentes 1 à 10, la tige de piston (2) à une position dans la chambre de travail (7) supérieure comportant une dérivation (10) pour l'écoulement de fluide de la chambre de travail supérieure dans la chambre de travail inférieure (7, 8) à travers la tige de piston (2) et le prolongement de la tige de piston (2.1) directement dans la soupape (9) dépendant de la fréquence disposée sur le piston (6) dépendant de la course.
